# FASCICULE DE BREVET EUROPEEN

(11) **EP 3 095 917 B1**
(45) Date de publication et mention de la délivrance du brevet: **17.01.2018**
(21) Numéro de dépôt: 16168837.9
(22) Date de dépôt: 10.05.2016
(51) Int. Cl.: E01C 23/09, E02D 1/02, E21B 25/00, G01N 1/08

(54) **DISPOSITIF DE PRÉLEVEMENT D'UNE CAROTTE DE FORAGE**
VORRICHTUNG ZUR ENTNAHME EINES BOHRKERNS
DEVICE FOR SAMPLING A DRILL CORE

(30) Priorité: 13.05.2015 FR 1554299
(43) Date de publication de la demande: 23.11.2016
(73) Titulaire: Maxart, 84700 Sorgues (FR)
(72) Inventeur: JEAY, Eric, 84700 SORGUES (FR); APARISI, Patrick, 84700 SORGUES (FR)
(74) Mandataire: IP Trust

(56) Documents cités:
- DE-A1- 2 752 309
- US-A- 2 760 757
- US-A- 4 754 655
- US-A1- 2003 182 997
- US-A1- 2011 314 938

## Description

### DOMAINE DE L'INVENTION

La présente invention concerne le domaine du carottage de revêtements routiers. Elle concerne en particulier les dispositifs de prélèvement de carottes de forage pour analyse de la composition des revêtements routiers.

### ARRIERE PLAN TECHNOLOGIQUE DE L'INVENTION

Dans la période 1978 à 1995, de l'amiante a été intégrée dans les revêtements routiers, dans des proportions de l'ordre de 1% de la masse totale, pour permettre de doubler la durée de vie des routes (passant de 5 à 10 ans environ) et diminuer les travaux d'entretien. Ces enrobés ont été utilisés autant sur les réseaux urbains qu'autoroutiers, avec une répartition par réseau ou par région hétérogène.

Aujourd'hui, la nécessité de renouvellement du patrimoine routier, associée à l'évolution du contexte réglementaire, impose de nouvelles exigences aux maitres d'ouvrage et aux entreprises en charge des travaux ; en particulier, il est impératif d'évaluer la présence de produits dangereux dans les chaussées à renouveler, il est interdit de valoriser des enrobés contenant de l'amiante et il est indispensable de prendre en compte les protections nécessaires pour les salariés intervenant sur les chantiers avec enrobés routiers amiantés (compte tenu des risques d'inhalation de poussières pouvant atteindre les alvéoles pulmonaires et déclencher des maladies pulmonaires graves).

Le document US3366185 divulgue l'un des premiers dispositifs roulants de forage par carottage pour prélever des carottes de forage sur les revêtements des routes en béton ou en bitume, en utilisant des dispositifs de sondage par carottage connus en soi. Le dispositif de sondage par carottage est monté sur une plaque de base d'environ 15mm d'épaisseur qui peut osciller par un levier articulé sur la partie arrière d'une remorque à essieu unique et la partie avant de cette remorque porte un fût d'eau sur un socle pour équilibrer les poids sur l'essieu. Selon le mode de réalisation du carottage décrit dans ce document, aucune précaution n'est prise quant au forage et au prélèvement de la carotte et à la potentielle dangerosité des matériaux composant le revêtement routier : émission de poussières, contact avec l'échantillon prélevé.

Le document US4887413 concerne un outil d'échantillonnage de matériaux de construction dans le cas de présence suspectée de fibres d'amiante. Un élément de coupe annulaire (tubulaire) est tourné pour prélever un échantillon d'un mur à l'étude. Une cartouche en forme de caisson entoure l'élément de coupe pour piéger toutes les particules de fibres d'amiante qui pourraient autrement s'échapper dans l'atmosphère. Des capsules de fermeture peuvent être appliquées à la cartouche, de sorte que la cartouche peut être utilisée pour expédier (transport) l'échantillon à un laboratoire pour analyse. Ce document divulgue un dispositif permettant le carottage et l'éjection d'un échantillon dans un contenant clos ; néanmoins, il n'est pas adapté au carottage de revêtements routiers beaucoup plus résistants et durs à forer et requiert une action manuelle, un contact avec le contenant et les potentielles poussières générées, pour l'application des capsules de fermeture.

Le document US2760757 divulgue un dispositif de prélèvement d'une carotte de forage selon le préambule de la revendication 1. Là non plus, aucune précaution n'est prise quant à la potentielle dangerosité des matériaux de l'échantillon prélevé.

### OBJET DE L'INVENTION

Un objet de l'invention est donc de proposer un dispositif obviant les inconvénients de l'art antérieur. Un objet de l'invention est notamment un dispositif permettant le forage et le prélèvement sécurisés d'échantillons de carottage, tenant compte de la présence potentielle d'amiante dans les revêtements sondés.

### BREVE DESCRIPTION DE L'INVENTION

L'invention concerne un dispositif de prélèvement d'une carotte de forage comportant un châssis destiné à positionner le dispositif sur le sol et un organe de guidage, solidaire du châssis, pour recevoir un tube de forage; l'organe de guidage comprenant un orifice d'entrée en regard d'un orifice de sortie destiné à être positionné au niveau du sol, les orifices permettant le maintien du tube de forage pendant le prélèvement de la carotte;
le dispositif de prélèvement est remarquable en ce que l'organe de guidage comprend:
- une tête d'aspiration agencée au niveau de l'orifice sortie et configurée pour prévenir l'émission dans l'environnement de résidus de carottage ;
- une sache de prélèvement pour recevoir la carotte de forage, fixée par des éléments de maintien au niveau de l'orifice d'entrée et de la tête d'aspiration.

Le dispositif de prélèvement selon l'invention permet ainsi de maintenir le tube de forage, également nommé carottier, d'aspirer les poussières et boues générées par l'opération de carottage et de placer l'échantillon ou carotte dans une sache de prélèvement. Il permet un prélèvement sécurisé pour l'environnement et pour les opérateurs.

Selon des caractéristiques avantageuses de l'invention, prises seules ou en combinaison :
- le châssis comprend un socle plan apte à être maintenu au sol par lestage ; cela permet d'assurer une bonne stabilité au dispositif.
- l'organe de guidage comprend un mât amovible, sensiblement perpendiculaire au socle, pour guider en translation un moteur de forage ;
- le châssis et l'organe de guidage sont articulés entre eux ; cette caractéristique permet en particulier d'améliorer la portabilité du dispositif entre les utilisations.

- l'organe de guidage comporte un élément de blocage du tube de forage, au niveau de l'orifice d'entrée ;
- chacun des éléments de maintien de la sache est constitué d'un sapin d'emmanchement et d'un collier de serrage ;
- la tête d'aspiration est formée d'un bloc principal muni d'une première ouverture en regard de l'orifice de sortie et d'un capot supérieur fixé hermétiquement au bloc principal via une membrane d'étanchéité ;
- la tête d'aspiration comporte un embout adaptateur apte à être connecté à un système d'aspiration ;
- le dispositif de prélèvement comprend en outre un système d'aspiration et de stockage des résidus de forage, connecté à la tête d'aspiration ;
- la sache est constituée d'un matériau plastique thermosoudable.

L'invention concerne également une méthode de prélèvement d'une carotte de forage comportant:
- une étape d'extraction de la carotte du sol via un tube de forage maintenu dans un organe de guidage, pour la placer directement dans un espace clos défini par une sache ; étape pendant laquelle une tête d'aspiration positionnée au niveau du forage aspire des résidus de carottage générés, pour prévenir leur émission dans l'environnement ;
- une étape de confinement de la carotte par scellement hermétique de la sache.

Selon des caractéristiques avantageuses de l'invention, l'étape de confinement comprend :
- le relevage et le blocage du tube de forage dans l'organe de guidage, pour positionner l'extrémité du tube au-dessus d'un niveau haut ;
- le soudage hermétique de la partie inférieure de la sache ;
- l'éjection de la carotte du tube de forage ;
- le soudage hermétique de la partie supérieure de la sache audit niveau haut.

Selon une caractéristique avantageuse de l'invention, la carotte de forage est extraite d'un revêtement de sol susceptible de contenir des matériaux contaminants.

### BREVE DESCRIPTION DES DESSINS

D'autres caractéristiques et avantages de l'invention ressortiront de la description détaillée de l'invention qui va suivre en référence aux figures annexées sur lesquelles :
- la figure 1 présente une vue en perspective d'un premier mode de réalisation du dispositif de prélèvement selon l'invention ;
- la figure 2 présente une vue en perspective de dessous d'un premier mode de réalisation du dispositif de prélèvement selon l'invention ;
- la figure 3 présente une vue latérale d'un premier mode de réalisation du dispositif de prélèvement selon l'invention ;
- la figure 4 présente une vue latérale d'un premier mode de réalisation du dispositif de prélèvement selon l'invention, en fonctionnement, avec en outre une carotteuse et un conduit connecté au système d'aspiration ;
- la figure 5 présente une succession d'étapes pour le confinement de la carotte dans la sache, conforme à une méthode de prélèvement selon l'invention ;
- la figure 6 présente une vue latérale d'un second mode de réalisation du dispositif selon l'invention.

### DESCRIPTION DETAILLEE DE L'INVENTION

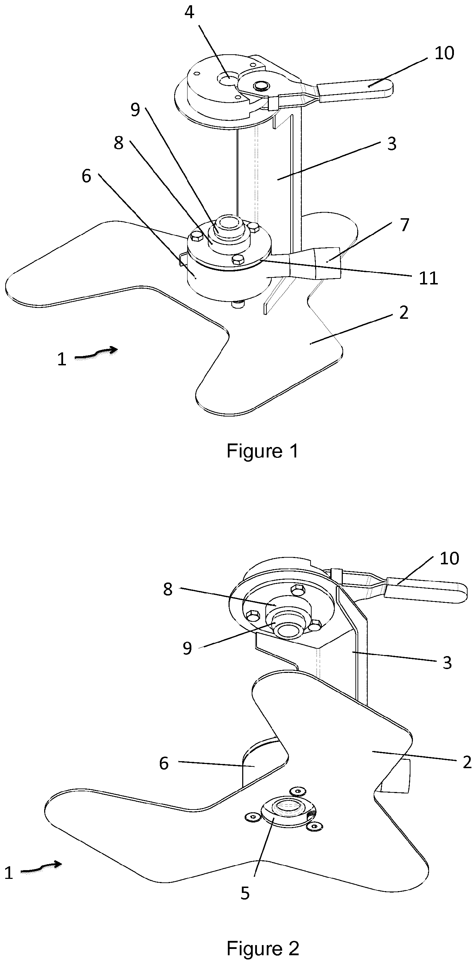

La figure 1 représente un premier mode de réalisation d'un dispositif de prélèvement 1 d'une carotte de forage selon l'invention. Le dispositif de prélèvement 1 comporte un châssis 2 destiné à être positionné sur le sol. Le châssis aura avantageusement une forme permettant une bonne assise au sol et une bonne stabilité du dispositif, notamment en fonctionnement lorsqu'une carotteuse sera montée sur celui-ci. Sur la figure 1, la forme en socle plan du châssis permet en particulier à un utilisateur de positionner ses pieds sur les deux parties de part et d'autre de l'axe principal du dispositif pour lester celui-ci et renforcer sa stabilité en fonctionnement. Le dispositif de prélèvement 1 selon le premier mode de réalisation est particulièrement adapté pour le prélèvement d'échantillon de revêtement routier sur une profondeur de quelques dizaines de millimètres, par exemple de 80mm.

Le dispositif de prélèvement 1 comporte également un organe de guidage 3, solidaire du châssis, apte à recevoir un tube de forage, également appelé carottier. L'organe de guidage 3 comprend un orifice d'entrée 4 en regard d'un orifice de sortie 5, ce dernier étant représenté sur la figure 2 en vue de dessous. Les orifices d'entrée 4 et de sortie 5 sont destinés à recevoir le carottier pour le prélèvement de la carotte de forage. L'orifice de sortie est donc destiné à être positionné au niveau du sol, sur le lieu du prélèvement. Selon le premier mode de réalisation du dispositif de prélèvement 1 présenté sur les figures 1 et 2, une ouverture est aménagée au niveau du châssis 2 en vis-à-vis de l'orifice de sortie 5, de sorte que le carottier puisse pénétrer dans le sol à prélever. Selon une variante de ce mode de réalisation, le châssis 2 a une forme évidée au centre, l'évidemment étant en regard de l'orifice de sortie 5 de l'organe de guidage 3. Avantageusement, le châssis 2 et l'organe de guidage 3 sont réalisés en matériau métallique. Ils peuvent éventuellement être constitués d'autres types de matériaux, assurant la solidité et la rigidité adéquate.

L'organe de guidage 3 comprend également un élément de blocage 10 qui permet notamment de maintenir le carottier en position relevée, après l'opération de carottage, pendant les étapes de confinement de la carotte prélevée. L'élément de blocage 10 peut avantageusement comporter une manette actionnable permettant de passer d'une position libre à une position bloquée.

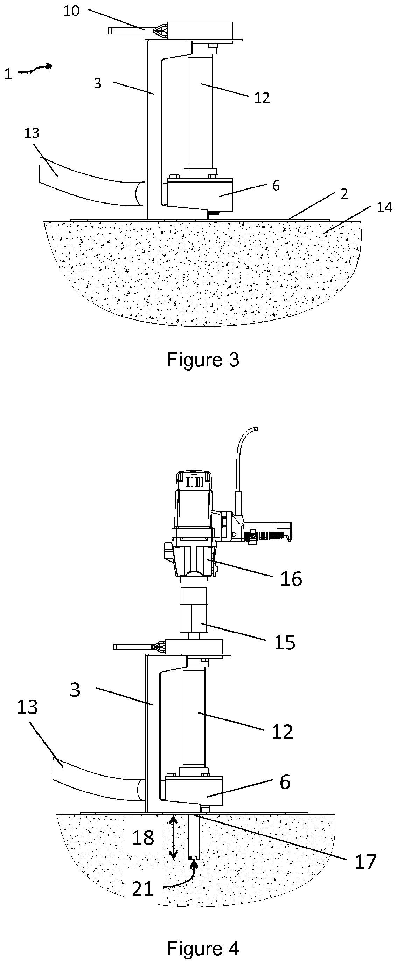

L'organe de guidage 3 comprend en outre une tête d'aspiration 6 agencée au niveau de l'orifice de sortie 5. La tête d'aspiration 6 est formée d'un bloc principal muni d'une première ouverture en regard de l'orifice de sortie 5 et d'un capot supérieur fixé hermétiquement au bloc principal via une membrane d'étanchéité 11. Le capot supérieur est muni d'une deuxième ouverture en regard de la première ouverture. Dans cette configuration, le carottier sera introduit dans l'organe de guidage 3 en traversant successivement l'orifice d'entrée 4, la deuxième puis la première ouverture de la tête d'aspiration 6 et enfin l'orifice de sortie 5. Le bloc principal de la tête d'aspiration 6 comporte un embout adaptateur 7 apte à être connecté à un système d'aspiration au moyen d'un conduit 13 représenté sur la figure 3. La tête d'aspiration 6, agencée au niveau du point de forage dans le sol 14, est ainsi configurée pour aspirer les résidus de type poussières ou boues pendant l'étape de carottage ; cela permet d'éviter l'émission dans l'environnement de résidus de carottage. Le système d'aspiration est avantageusement associé à un système de stockage des résidus de forage, compatible avec le traitement de matières dangereuses et/ou contaminantes.

Comme représenté sur la figure 3, le dispositif de prélèvement 1 comporte également une sache de prélèvement 12 pour recevoir une carotte de forage. La sache 12 est fixée par des éléments de maintien au niveau de l'orifice d'entrée 4, en-dessous de l'élément de blocage 10, et au niveau de la tête d'aspiration 6, au-dessus du capot supérieur. Les éléments de maintien sont constitués par exemple d'un sapin d'emmanchement 9 et d'un collier de serrage 8, représentés sur les figures 1 et 2. La sache 12 définit ainsi un espace clos entre l'orifice d'entrée 4 et la tête d'aspiration 6. De manière avantageuse, la sache est constituée d'un matériau plastique thermosoudable.

La figure 4 présente un dispositif de prélèvement 1, mis en oeuvre selon une méthode de prélèvement conforme à l'invention. La méthode de prélèvement d'une carotte de forage 21 comporte une étape d'extraction de la carotte 21, via un carottier 15 maintenu dans l'organe de guidage 3, pour placer ladite carotte 21 dans l'espace clos défini par la sache 12, entre l'orifice d'entrée 4 de l'organe de guidage 3 et la tête d'aspiration 6. L'étape d'extraction nécessite l'insertion du carottier 15 dans le dispositif de prélèvement 1, à travers les orifices d'entrée 4 et de sortie 5. Le tube de forage 15 traverse ainsi la sache maintenue entre l'orifice d'entrée 4 et la tête d'aspiration 6. Le moteur de la carotteuse 16 peut ensuite être connecté au carottier 15. Le système d'aspiration connecté par le conduit 13 à la tête d'aspiration est mis en marche, afin d'aspirer les résidus de carottage générés au niveau du forage 17. L'opération de carottage peut ensuite démarrer, sur une profondeur 18 déterminant la taille de la carotte 21. Lors d'un carottage, de l'eau de refroidissement est injectée dans le tube de forage 15 : la tête d'aspiration 6 recueille donc au niveau du forage 17 des poussières mais également des boues ou liquides issus du carottage.

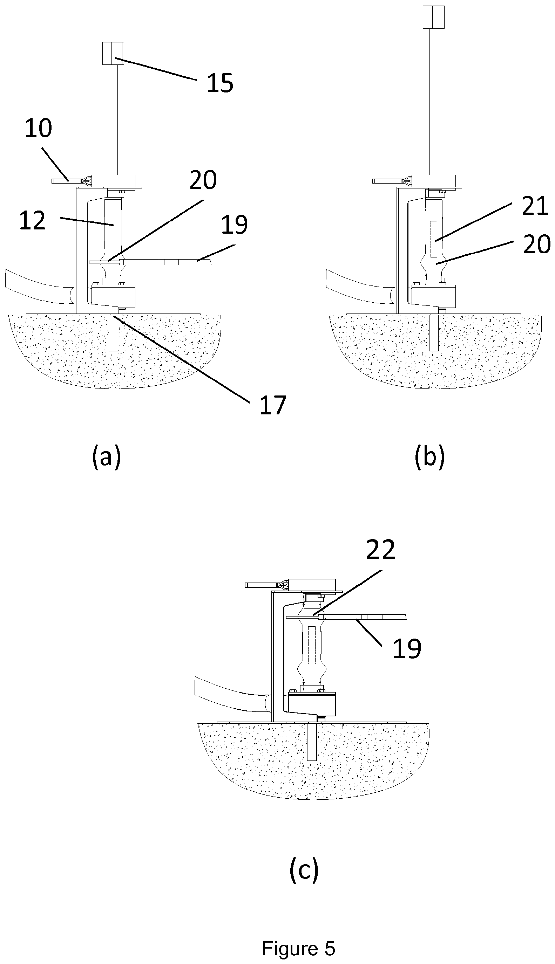

La méthode de prélèvement comporte également une étape de confinement de la carotte 21 par scellement hermétique de la sache 12. La figure 5 présente une succession de séquences faisant partie de l'étape de confinement. Lorsque le carottage est terminé, le moteur de la carotteuse 16 peut être désolidarisé du tube de forage 15. Le carottier 15, contenant la carotte 21, est alors relevé au-dessus d'un niveau haut 22, correspondant au niveau du scellement ultérieur de la partie supérieure de la sache 12. L'élément de blocage 10 permet de maintenir le tube de forage 15 en position relevée. Le carottier ainsi positionné, la partie inférieure 20 de la sache 12 est scellée ; avantageusement, le scellement est effectué à l'aide d'une pince thermo-soudeuse 19 permettant de souder de manière hermétique, la matière plastique de la sache 12, tel que représenté sur la figure 5 (a). La carotte 21 est ensuite éjectée du carottier 15 et retombe directement dans la sache 12 dont la partie inférieure 20 est scellée (figure 5 (b)). La partie supérieure est scellée à son tour, au niveau haut 22, à l'aide de la pince thermo-soudeuse 19 (figure 5 (c)). A ce stade, l'échantillon 21 se trouve hermétiquement confiné dans la sache 12. Celle-ci est ensuite désolidarisée du dispositif de prélèvement 1 par desserrage des éléments de maintien 8,9.

La carotte de forage 21 ainsi confinée peut être transportée et récupérée par les organismes spécialisés dans l'analyse de la composition de ce type d'échantillons.

Grâce au dispositif de prélèvement 1 de carotte de forage 21 et à la méthode de prélèvement selon l'invention, l'émission de poussières ou de boues contaminantes est contenue pendant l'opération de carottage grâce à la présence de la tête aspirante 6 ; de plus, l'échantillon prélevé n'est jamais en contact avec l'utilisateur et est finalement confiné dans une sache hermétique. Le forage et le prélèvement sont ainsi sécurisés pour l'environnement ainsi que pour les opérateurs, tenant compte de la présence potentielle d'amiante dans les sols sondés.

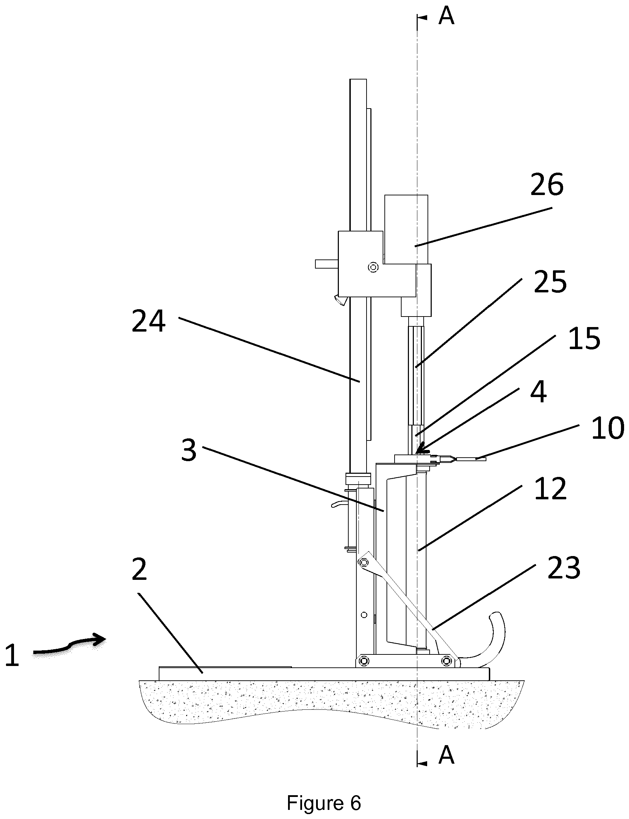

La figure 6 représente un second mode de réalisation d'un dispositif de prélèvement 1 d'une carotte de forage selon l'invention. Le dispositif de prélèvement 1 comporte un châssis 2 destiné à être positionné sur le sol. Le dispositif de prélèvement 1 selon ce second mode de réalisation est particulièrement adapté pour le prélèvement d'échantillon de revêtement routier sur une profondeur de plusieurs centaines de millimètres, par exemple 400mm. Le châssis 2 a avantageusement une forme permettant le lestage au moyen d'un véhicule : par exemple, par positionnement de la roue avant d'un camion sur une partie plane du châssis 2 prévue à cet effet. Une telle configuration favorise une bonne assise au sol et une bonne stabilité du dispositif, notamment en fonctionnement lorsqu'une carotteuse est montée sur celui-ci.

Le dispositif de prélèvement 1 comporte également un organe de guidage 3, solidaire du châssis 2, apte à recevoir un tube de forage 15 ou carottier. Dans le cas de forage sur des profondeurs de plusieurs dizaines de centimètres, l'équipement de carottage, également nommé carotteuse, a un poids et un encombrement ne permettant pas à un utilisateur de l'opérer directement. Selon ce second mode de réalisation, l'organe de guidage 3 comprend donc un mât amovible 24 permettant de fixer et guider en translation le moteur de la carotteuse 26. Le mât est agencé de sorte que le tube de forage 15, vissé sur une éventuelle rallonge 25 et actionné par le moteur de la carotteuse 26 soit aligné selon l'axe (A) représenté sur la figure 6, axe d'alignement des orifices d'entrée 4 et de sortie 5 de l'organe de guidage 3.

Selon le second mode de réalisation, l'organe de guidage 3 et le châssis 2 sont articulés entre eux au moyen d'éléments de liaison 23. Cette configuration améliore la portabilité du dispositif de prélèvement 1, qui en position de repos, peut être rétracté : c'est-à-dire que l'organe de guidage 3 passe d'une position sensiblement perpendiculaire à la partie plane du châssis (en fonctionnement) à une position parallèle à la partie plane du châssis (hors fonctionnement, en stockage par exemple).

Selon le second mode de réalisation du dispositif de prélèvement 1, l'organe de guidage 3 est constitué des mêmes éléments que selon le premier mode de réalisation, à savoir, les orifices d'entrée 4 et de sortie 5, l'élément de blocage 10, la tête d'aspiration 6, la sache 12, agencés et maintenus de manière similaire.

Le dispositif de prélèvement 1 de carotte de forage 21 et la méthode selon l'invention sont particulièrement adaptés au prélèvement d'échantillon de revêtements routiers, susceptibles de contenir des matériaux contaminants. Ils peuvent également s'appliquer à d'autres types de sols, tels que des dallages par exemple.

## Revendications

1. Dispositif de prélèvement (1) d'une carotte de forage (21) comportant un châssis (2) destiné à positionner le dispositif sur le sol (14) et un organe de guidage (3), solidaire du châssis (2), pour recevoir un tube de forage (15); l'organe de guidage (3) comprenant un orifice d'entrée (4) en regard d'un orifice de sortie (5) destiné à être positionné au niveau du sol (14), les orifices (4, 5) permettant le maintien du tube de forage (15) pendant le prélèvement de la carotte (21);
le dispositif de prélèvement (1) étant **caractérisé en ce que** l'organe de guidage (3) comprend :
• une tête d'aspiration (6) agencée au niveau de l'orifice de sortie (5) et configurée pour prévenir l'émission dans l'environnement de résidus de carottage ;
• une sache de prélèvement (12) pour recevoir la carotte de forage (21), fixée par des éléments de maintien (8, 9) au niveau de l'orifice d'entrée (4) et de la tête d'aspiration (6).

2. Dispositif de prélèvement (1) d'une carotte de forage (21) selon la revendication 1, dans lequel le châssis (2) comprend un socle plan apte à être maintenu au sol par lestage.

3. Dispositif de prélèvement (1) d'une carotte de forage (21) selon la revendication 2, dans lequel l'organe de guidage (3) comprend un mât amovible (24), sensiblement perpendiculaire au socle, pour guider en translation un moteur de forage (26).

4. Dispositif de prélèvement (1) d'une carotte de forage (21) selon l'une des revendications précédentes, dans lequel le châssis (2) et l'organe de guidage (3) sont articulés entre eux.

5. Dispositif de prélèvement (1) d'une carotte de forage (21) selon l'une des revendications précédentes, dans lequel l'organe de guidage (3) comporte un élément de blocage (10) du tube de forage (15), au niveau de l'orifice d'entrée (4).

6. Dispositif de prélèvement (1) d'une carotte de forage (21) selon l'une des revendications précédentes, dans lequel chacun des éléments de maintien de la sache (12) est constitué d'un sapin d'emmanchement (9) et d'un collier de serrage (8).

7. Dispositif de prélèvement (1) d'une carotte de forage (21) selon l'une des revendications précédentes, dans lequel la tête d'aspiration (6) comporte un embout adaptateur (7) apte à être connecté à un système d'aspiration.

8. Dispositif de prélèvement (1) d'une carotte de forage (21) selon l'une des revendications précédentes, comprenant un système d'aspiration et de stockage des résidus de forage, connecté à la tête d'aspiration.

9. Dispositif de prélèvement (1) d'une carotte de forage (21) selon l'une des revendications précédentes, dans lequel la sache (12) est constituée d'un matériau plastique thermosoudable.

10. Méthode de prélèvement d'une carotte de forage (21) utilisant un dispositif de prélèvement selon l'une des revendications 1 à 9, et comportant :
• une étape d'extraction de la carotte (21) du sol via un tube de forage (15) maintenu dans un organe de guidage (3), pour la placer directement dans un espace clos défini par une sache (12) ; étape pendant laquelle une tête d'aspiration (6) positionnée au niveau du forage (17) aspire des résidus de carottage générés, pour prévenir leur émission dans l'environnement ;
• une étape de confinement de la carotte (21) par scellement hermétique de la sache (12).

11. Méthode de prélèvement d'une carotte de forage (21) selon la revendication 10, dans laquelle l'étape de confinement comprend :
• le relevage et le blocage du tube de forage (15) dans l'organe de guidage (3), pour positionner l'extrémité du tube au-dessus d'un niveau haut (22) ;
• le soudage hermétique de la partie inférieure de la sache (12) ;
• l'éjection de la carotte (21) du tube de forage (15) ;
• le soudage hermétique de la partie supérieure de la sache (12) audit niveau haut (22).

12. Méthode de prélèvement d'une carotte de forage (21) selon l'une des revendications 10 et 11, dans laquelle la carotte de forage (21) est extraite d'un revêtement de sol susceptible de contenir des matériaux contaminants.

## Patentansprüche

1. Vorrichtung zur Entnahme (1) eines Bohrkerns (21), bestehend aus einem Rahmen (2), der dazu bestimmt ist, die Vorrichtung auf dem Boden (14) zu positionieren, und einem mit dem Rahmen (2) fest verbundenen Führungselement (3) zur Aufnahme eines Bohrgestänges (15), wobei das Führungselement (3) eine Eingangsöffnung (4) gegenüber einer Ausgangsöffnung (5) aufweist und dazu bestimmt ist, auf dem Boden (14) positioniert zu werden, wobei die Öffnungen (4, 5) dafür sorgen, dass das Bohrgestänge (15) während der Entnahme des Bohrkerns (21) gehalten wird; wobei die Entnahmevorrichtung (1) **dadurch gekennzeichnet ist, dass** das Führungselement (3) folgendes umfasst:
• einen Saugkopf (6), der in Höhe der Ausgangsöffnung (5) angeordnet und so gestaltet ist, dass er das Austreten von Kernbohrungsabfällen in die Umwelt verhindert;
• einen Entnahmebeutel (12) zur Aufnahme des Bohrkerns (21), welcher anhand von Befestigungselementen (8, 9) an der Eingangsöffnung (4) und am Saugkopf (6) befestigt ist.

2. Vorrichtung zur Entnahme (1) eines Bohrkerns (21) gemäß Anspruch 1, in welcher der Rahmen (2) einen ebenen Sockel umfasst, der durch Beschwerung am Boden gehalten werden kann.

3. Vorrichtung zur Entnahme (1) eines Bohrkerns (21) nach Anspruch 2, in welcher das Führungselement (3) einen im Wesentlichen senkrecht zum Sockel stehenden, abnehmbaren Masten (24) zur translatorischen Führung eines Bohrmotos (26) umfasst.

4. Vorrichtung zur Entnahme (1) eines Bohrkerns (21) nach einem der vorhergehenden Ansprüche, in welcher der Rahmen (2) und das Führungselement (3) durch ein Gelenk miteinander verbunden sind.

5. Vorrichtung zur Entnahme (1) eines Bohrkerns (21) nach einem der vorhergehenden Ansprüche, in welcher das Führungselement (3) in Höhe der Eingangsöffnung (4) ein Sperrelement (10) für das Bohrgestänge (15) enthält.

6. Vorrichtung zur Entnahme (1) eines Bohrkerns (21) nach einem der vorhergehenden Ansprüche, in welcher jedes der Befestigungselemente des Beutels (12) mit einem Einsteckzapfen (9) und einem Klemmring versehen (8) ist.

7. Vorrichtung zur Entnahme (1) eines Bohrkerns (21) gemäß einem der vorhergehenden Ansprüche, in welcher der Saugkopf (6) ein Anpassstück (7) enthält, das an ein Saugsystem angeschlossen werden kann.

8. Vorrichtung zur Entnahme (1) eines Bohrkerns (21) gemäß einem der vorhergehenden Ansprüche, welche ein Saug- und Lagersystem für Bohrabfälle enthält, das an den Saugkopf angeschlossen ist.

9. Vorrichtung zur Entnahme (1) eines Bohrkerns (21) nach einem der vorhergehenden Ansprüche, in welcher der Beutel (12) aus heißsiegelfähigem Kunststoff besteht.

10. Verfahren zur Entnahme eines Bohrkerns (21), in dem eine Entnahmevorrichtung gemäß einem der Ansprüche 1 bis 9 benutzt wird, und welches folgende Schritte umfasst:
• einen Schritt der Extraktion des Bohrkerns (21) aus dem Boden mittels eines Bohrgestänges (15), das in einem Führungselement (3) gehalten wird, um ihn direkt in einen durch einen Beutel (12) abgegrenzten Bereich zu platzieren, wobei in diesem Schritt ein an der Bohrung (17) angelegter Saugkopf (6) die entstehenden Bohrabfälle absaugt, damit sie nicht in die Umwelt gelangen;
• eine Phase des Einschlusses des Bohrkerns (21) durch hermetisch dichtes Versiegeln des Beutels (12).

11. Verfahren zur Entnahme eines Bohrkerns (21) nach Anspruch 10, in welchem der Schritt des Einschlusses Folgendes umfasst:
• das Anheben und Feststellen des Bohrgestänges (15) im Führungselement (3), um das Ende des Gestänges oberhalb einer hohen Stelle (22) zu positionieren;
• das hermetisch dichte Verschweißen des unteren Teils des Beutels (12);
• den Auswurf des Bohrkerns (21) aus dem Bohrgestänge (15);
• das hermetisch dichte Verschweißen des oberen Teils des Beutels (12) an besagter hoher Stelle (22).

12. Verfahren zur Entnahme eines Bohrkerns (21) gemäß einem der Ansprüche 10 und 11, in welchem der Bohrkern (21) aus einem Bodenbelag extrahiert wird, der kontaminierte Materialien enthalten könnte.

## Claims

1. A device (1) for sampling a drill core (21) including a frame (2) intended to position the device on the ground (14) and a guide member (3), integral with the frame (2), for receiving a drill pipe (15);
with the guide member (3) comprising:
- an inlet orifice (4) facing an outlet orifice (5) intended to be positioned at the ground level (14), with the orifices (4, 5) making it possible to hold the drill tube (15) during the sampling of the core (21);
with the sampling device (1) being **characterized in that** the guide member (3) comprises:
- a suction head (6) arranged at the outlet orifice (5) and so configured as to prevent the emission of core residues into the environment;
- a sampling pocket (12) for receiving the drill core (21) fixed by holding elements (8, 9) at the inlet orifice (4) and the suction head (6).

2. A device (1) for sampling a drill core (21) according to claim 1, wherein the frame (2) comprises a flat base adapted to be held on the ground by ballasting.

3. A device (1) for sampling a drill core (21) according to claim 2, wherein the guide member (3) comprises a removable mast (24), substantially perpendicular to the base, for guiding a drilling motor (26) in translation.

4. A device (1) for sampling a drill core (21) according to one of the preceding claims, wherein the frame (2) and the guide member (3) are hinged together.

5. A device (1) for sampling a drill core (21) according to one of the preceding claims, wherein the guide member (3) comprises an element (10) for locking the drill pipe (15), at the inlet orifice (4).

6. A device (1) for sampling a drill core (21) according to one of the preceding claims, wherein each of the pocket (12) holding elements consists of a fitting rack (9) and a clamp (8).

7. A device (1) for sampling a drill core (21) according to one of the preceding claims, wherein the suction head (6) comprises an adapter tip (7) adapted to be connected to a suction system.

8. A device (1) for sampling a drill core (21) according to one of the preceding claims, comprising a system for the suction and storage of drilling residues, connected to the suction head.

9. A device (1) for sampling a drill core (21) according to one of the preceding claims, wherein the pocket (12) consists of a heat-sealable plastic material.

10. A method for sampling a drill core (21) using a sampling device according to one of claims 1 to 9 and comprising:
• a step of extracting the core (21) from the ground via a drill pipe (15) held in a guide member (3), in order to place same directly into a confined space defined by a pocket (12); i.e. a step during which a suction head (6) positioned at the drilling (17) sucks the generated core residues, so as to prevent the emission thereof into the environment;
• a step of confining the core (21) by hermetic sealing of the pocket (12).

11. A method for sampling a drill core (21) according to claim 10, wherein the step of confining includes:
• the lifting and locking of the drill pipe (15) in the guide member (3), for positioning the pipe end above a high level (22);
• the hermetic sealing of the lower part of the pocket (12);
• the ejection of the core (21) from the drill pipe (15);
• the hermetic sealing of the upper part of the pocket (12) at said high level (22).

12. A method for sampling a drill core (21) according to one of claims 10 and 11, wherein the drill core (21) is extracted from a ground surface liable to contain contaminating materials.
